Europäisches Patentamt

European Patent Office

Office européen des brevets

(19)

(11) Veröffentlichungsnummer : **0 067 935**
**B1**

(12) **EUROPÄISCHE PATENTSCHRIFT**

(45) Veröffentlichungstag der Patentschrift :
30.12.86

(21) Anmeldenummer : 82103084.8

(22) Anmeldetag : 10.04.82

(51) Int. Cl.⁴ : **G 01 N 27/90**, G 01 N 27/82,
G 12 B 15/04

(54) Vorrichtung zum Abtasten einer Oberfläche eines heissen Prüfteiles.

(30) Priorität : 29.05.81 DE 3121331

(43) Veröffentlichungstag der Anmeldung :
29.12.82 Patentblatt 82/52

(45) Bekanntmachung des Hinweises auf die Patenterteilung : 30.12.86 Patentblatt 86/52

(84) Benannte Vertragsstaaten :
FR GB IT SE

(56) Entgegenhaltungen :
DE-B- 1 648 737
GB-A- 2 028 510
US-A- 3 694 735
US-A- 4 024 470
US-A- 4 379 261

(73) Patentinhaber : Institut Dr. Friedrich Förster Prüfgerätebau GmbH & Co. KG
Postfach 925 In Laisen 70
D-7410 Reutlingen 1 (DE)

(72) Erfinder : Luz, Hans
Hermann-Ehlers-Strasse 48/53
D-7410 Reutingen 1 (DE)

**Beschreibung**

Die Erfindung betrifft eine Vorrichtung zum Abtasten einer Oberfläche eines Prüfteiles durch mindestens eine in einer Ebene parallel zur genannten Oberfläche umlaufende Fehlerprüfsonde, mit einem Rotierkörper, in den die genannte Fehlerprüfsonde eingebaut ist, mit Antriebsmitteln zum Antrieb des Rotierkörpers und mit elektrischen Verbindungsmitteln zum Anschließen der Prüfsonde an eine elektronische Prüf- und Auswerteschaltung. Bei der Fehlerprüfsonde ist zwar vorzugsweise an eine Wirbelstromprüfsonde gedacht, es ist jedoch grundsätzlich jede andere Sonde der zerstörungsfreien Prüftechnik einsetzbar.

In US-PS-3 497 799 ist eine derartige Vorrichtung beschrieben, bei der in einen scheibenförmigen Rotierkörper ein Wirbelstromprüfsondenpaar eingebaut ist. Angetrieben wird der Rotierkörper über einen Keilriemen von einem Motor. Die elektrischen Verbindungsmittel zum Anschließen der umlaufenden Sonden an die Prüf- und Auswerteelektronik bestehen im vorliegenden Fall in Schleifringen und Bürsten. In anderen bekannten Vorrichtungen der beschriebenen Art werden statt dessen Rotierübertrager eingesetzt.

Wegen der erreichbaren hohen Umlaufgeschwindigkeiten der Sonden eignen sich derartige Vorrichtungen ausgezeichnet für eine schnelle Abtastung von Oberflächen. Die Schnelligkeit der Oberflächenabtastung läßt sich im übrigen noch durch Einsetzen mehrerer Fehlerprüfsonden in einem Rotierkörper erhöhen. Den Wünschen des Anwenders kommt auch entgegen, daß bei rotierenden Sonden die Rotationgeschwindigkeit zwischen Sonde und Prüfteil, die für den zeitlichen Verlauf des Fehlersignals maßgebend ist und dadurch einen starken Einfluß auf die Möglichkeit der Störsignalunterdrückung durch Filter besitzt, als konstant angesehen werden kann. Im Gegensatz dazu gibt es häufig Schwierigkeiten in dieser Hinsicht, wenn z. B. die Transportgeschwindigkeit des Prüfteils für den zeitlichen Verlauf der Fehlersignale maßgebend ist.

Aus den genannten Gründen ist verständlich, daß bei den Herstellern von Walzwerkerzeugnissen ein großes Interesse für den Einsatz der genannten Vorrichtungen zur Prüfung ihrer Erzeugnisse besteht. Von besonderer Bedeutung wäre hier die on-line-Prüfung von Brammen, Blöcken oder Knüppeln in heißem Zustand. Zur Zeit läßt man diese Halbzeuge nach dem Gießen sich fast auf Raumtemperatur abkühlen und erwärmt sie nach erfolgtem Prüfen und Entfernen der dabei ermittelten Fehler wieder auf die für das Walzen erforderliche Temperatur. Neben einer wesentlichen Energieeinsparung würde der Wegfall von Abkühlen und Wiederaufheizen eine Vereinfachung des Betriebsablaufes, eine Erhöhung der Produktion und eine verbesserte Steuerbarkeit des Gießprozesses insbesondere beim Stranggießen zur Folge haben.

Aus diesen Überlegungen heraus stellt sich die Erfindung die Aufgabe, eine Vorrichtung der eingangs definierten Gattung zu schaffen, die die Prüfung von heißem Halbzeug, d. h. Halbzeug bei Temperaturen in der Größenordnung bis zu 1 000 °C, erlaubt. Es ist in diesem Zusammenhang bekannt, bei stationären Fehlerprüfsonden Kühlmittel zu benutzen, um die Temperatur in der Umgebung der Sonde auf eine erlaubte Höhe herabzusetzen. So ist aus UP-PS-3 694 735 eine Wirbelstromprüfspulenanordnung zum Prüfen von heißem langgestrecktem Prüfgut wie Drähten und dgl. bekannt, bei der eine zylindrische, vom heißen Prüfgut durchlaufene Prüfspule an eine ringförmige Kammer angrenzt, die von einem Kühlmittel durchflossen wird. Lösungen der o. g. Aufgabe, die für den hier vorliegenden Fall einer in einen Rotierkörper eingebauten Sonde brauchbar sind, liegen jedoch bisher nicht vor.

Die erfindungsgemäße Lösung besteht in einer Vorrichtung, die gemäß Patentanspruch 1 gekennzeichnet ist.

Durch die erfindungsgemäße Lösung wird in einfacher Weise ein Einsatz der bekannten Vorrichtungen für solche Prüfteile ermöglicht, die noch eine vom Gießen herrührende sehr hohe Temperatur aufweisen. Eine herkömmliche Kühlung des Rotierkörpers von seiner Unterseite her hätte den Abstand zwischen Sonden und Prüfteil in unzulässigem Maße erhöht, während die erfindungsgemäße Lösung überhaupt keine Erhöhung dieses Abstandes mit sich bringt. Ein besonderer Vorteil der erfindungsgemäßen Lösung ist es, daß für die Verbindung zwischen der feststehenden Zuführanordnung des Kühlmittels mit der Bohrung der Hohlwelle keine Abdichtungsmittel notwendig werden, da sich beim Kühlmittel die für eine hinreichende Kühlung benötigte Durchflußgeschwindigkeit aufgrund der auf dasselbe einwirkenden Zentrifugalkraft von selbst und ohne einen von außen her bewirkten Überdruck des Kühlmittels einstellt. Dadurch wird eine äußerst einfache Einmündung des Kühlmittels aus der feststehenden Zuführanordnung in die Bohrung der Hohlwelle möglich. Eine Reihe von vorteilhaften. Ausgestaltungen der Erfindung wird in den Unteransprüchen angegeben.

Im folgenden wird die Erfindung in einem Ausführungsbeispiel und mit Hilfe von Figuren näher erläutert. Es zeigen im einzelnen :

Figur 1 einen Schnitt durch eine erfindungsgemäße Vorrichtung

Figur 2 eine Draufsicht auf ein Teil der Vorrichtung

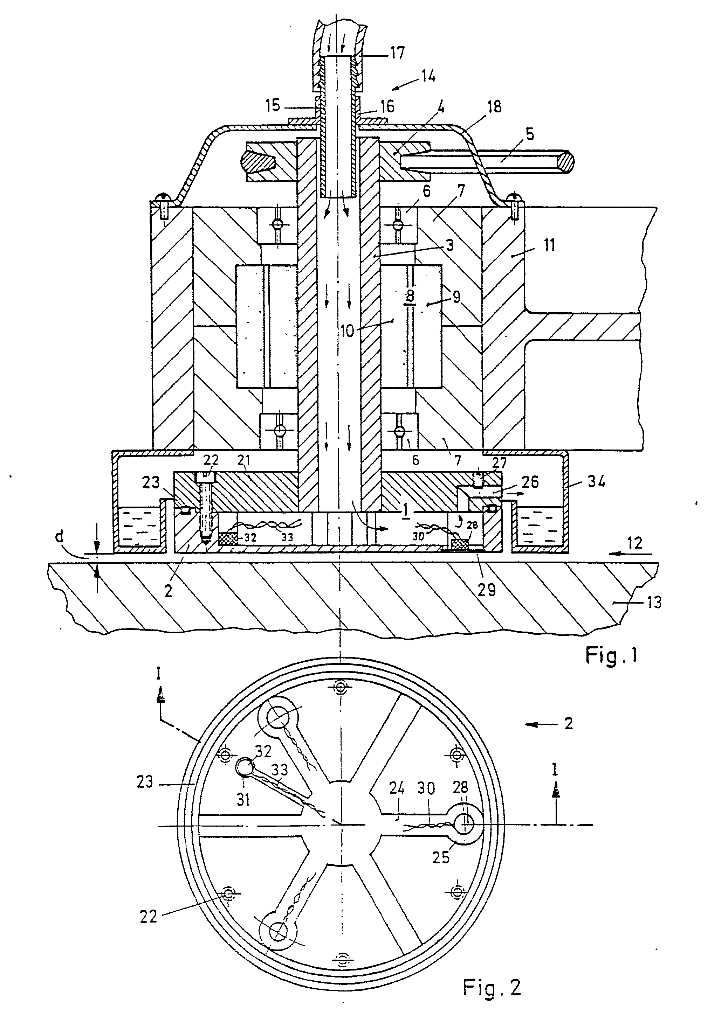

In Figur 1 ist ein senkrechter Schnitt entlang den Linien I-I wiedergegeben, in Figur 2 die Draufsicht auf das Unterteil 2 des Rotierkörpers 1, der weiter unten noch näher beschrieben werden soll. Rotierkörper 1 ist über eine Hohlwelle 3, eine Keilriemenscheibe 4 und einen Keilriemen 5 mit einem nicht dargestellten Antrieb verbunden, von dem er zu recht hohen Umlaufgeschwindigkeiten angetrieben werden kann. Hohlwelle 3 ruht in zwei Kugellagern 6, die von Lagerringen 7 gehalten werden. Zwischen den beiden Kugellagern 6 ist ein Rotiertransformatorsatz 8 angeordnet, dessen Statorteil 9 in Vertiefungen der beiden Lagerringe 7 gebettet ist und dessen Rotorteil 10 auf die Hohlwelle 3 aufgezogen ist. Die Lagerringe 7 werden von einem Flansch 11 umfaßt, der, von einer nicht dargestellten Führungseinrichtung getragen, den Rotierkörper 1 im vorgesehenen Abstand über der Oberfläche des relativ zum Rotierkörper etwa in Richtung von Pfeil 12 bewegten Prüfteils 13 hält. Eine Zuführeinrichtung 14 für das benutzte Kühlmittel, im allgemeinen Wasser, setzt sich zusammen aus einem Rohr 15, einen daran befestigten Kragen 16 und einer an das Rohr angeschlossenen Schlauchleitung 17, die mit einer Kühlmittelquelle in Verbindung steht. Das Rohr ist über den Kragen 16 und einen Kranz 18, der Öffnungen zum Durchlassen des Keilriemens 5 aufweist, am Flansch 11 angebracht. Die Mündungsseite des Rohres 15 kann berührungsfrei und ohne Dichtung in die Bohrung der Hohlwelle 3 eingeführt sein oder auch nur an den Eingang der Bohrung herangeführt sein.

Der Rotierkörper 1 ist scheibenförmig ausgebildet und besteht aus dem schon vorgenannten Unterteil 2 und einem Oberteil 21, beide massiv aus Bronze oder Messing ausgeführt. Unterteil 2 und Oberteil 21 werden von Schrauben 22 zusammengehalten und durch einen Dichtungsring 23 gegeneinander abgedichtet. In das Unterteil 2 sind sechs sternförmig nach außen führende Kühlkanäle 24 eingelassen, von denen drei in eine Kammer 25 auslaufen. Die Kühlwirkung kann noch erhöht werden, wenn man den Weg des Kühlmittels künstlich verlängert, indem man die Kanäle nicht geradlinig, sondern z. B. schlangenförmig oder im Zick-Zack verlaufen läßt, oder indem man einen oder mehrere spiralförmig nach außen führende Kanäle vorsieht.

Jeweils am Ende jedes Kühlkanals 24 sind im Oberteil 21 Auslaßbohrungen 26 angebacht, die an der Peripherie des Oberteils ins Freie münden. Der Querschnitt dieser Bohrungen 26 soll kleiner sein als der Querschnitt der Kühlkanäle 24 und kann bei Bedarf weiter reduziert werden durch eine Einstellschraube 27. Die Kammern 25, die an ihrer Unterseite eine Öffnung aufweisen, dienen zur Aufnahme jeweils einer Wirbelstromprüfsonde 28, die dort rundum vom Kühlmittel umströmt werden kann. Die Öffnung des Bodens an der Unterseite der Kammern 25 ist durch eine dünne Abdeckplatte 29 aus austenitischem Stahl geschlossen. Diese bietet einerseits einen hinreichenden Schutz für die Sonde 28, läßt andererseits die für die Erzeugung der Wirbelströme nötigen magnetischen Wechselfelder ohne nennenswerte Schwächung durchtreten. Die Anschlußdrähte 30 der Sonden 28 sind mit dem Rotorteil 10 des Rotiertransformatorsatzes 8 verbunden, dessen Statorteil 9 an die elektronischen Einrichtungen angeschlossen ist, die Signale der Sonden 28 weiterverarbeiten und auswerten. Eine weitere Kammer 31, die nicht vom Kühlmittel durchströmt wird, nimmt einen Temperaturfühler 32 auf, dessen Anschlüsse 33 ebenfalls über den Rotiertransformatorsatz 8 an die Auswerteeinrichtungen angeschlossen sind und dort die Temperatur am Ort des Fühlers 32 signalisieren. Eine am Flansch 11 befestigte ringförmige Auffangwanne 34 nimmt das aus den Bohrungen 26 ausströmende Kühlmittel auf und leitet es in geeigneter Weise ab.

Beim Betrieb der Vorrichtung muß darauf geachtet werden, daß stets genügend Kühlmittel zur hinreichenden Kühlung des Rotierkörpers von Zuführeinrichtung 14 herangeführt wird. Die Zufuhr des Kühlmittels kann portionsweise erfolgen, wobei die in der Hohlwelle vorhandene Kühlmittelmenge gewissermaßen als Puffer wirken kann. Die Zufuhr des Kühlmittels wird durch den Temperaturfühler 32 so gesteuert, daß eine vorgewählte Temperatur des Rotierkörpers 1 nicht überschritten wird.

**Patentansprüche**

1. Vorrichtung zum Abtasten einer Oberfläche eines Prüfteiles durch mindestens eine in einer Ebene parallel zur genannten Oberfläche umlaufende Prüfsonde, mit einem Rotierkörper, in den die genannte Fehlerprüfsonde eingebaut ist, mit Antriebsmitteln zum Antrieb des Rotierkörpers und mit elektrischen Verbindungsmitteln zum Anschließen der Prüfsonde an eine elektronische Prüf- und Auswerteschaltung, gekennzeichnet durch

a) einen Rotierkörper (1) aus massivem, gut wärmeleitendem Material hoher Wärmekapazität zum Abtasten eines heißen Prüfteiles,

b) von innen nach außen verlaufende Kühlkanäle (24) im Rotierkörper (1),

c) eine einerseits mit dem Rotierkörper (1), andererseits mit den Antriebsmitteln verbundene Hohlwelle (3), deren Bohrung an die Kühlkanäle (24) des Rotierkörpers (1) angeschlossen ist und

d) eine in die Bohrung der Hohlwelle (3) einmündende, feststehende Zuführanordnung (14) für ein Kühlmittel.

2. Vorrichtung nach Anspruch 1, dadurch gekennzeichnet, daß die Kühlkanäle (24) sternförmig von der Mitte nach außen verlaufen.

3. Vorrichtung nach Anspruch 2, dadurch gekennzeichnet, daß die Kühlkanäle (24) einen schlangenförmigen oder einem solchen ähnlichen Verlauf nehmen.

4. Vorrichtung nach Anspruch 1, dadurch gekennzeichnet, daß ein oder mehrere Kühlkanäle spiralig von innen nach außen führen.

5. Vorrichtung nach Anspruch 1, dadurch gekennzeichnet, daß der Rotierkörper (1) scheibenförmig ausgebildet und aus Unterteil (2) und Oberteil (21) zusammengesetzt ist.

6. Vorrichtung nach Anspruch 1, dadurch gekennzeichnet, daß die Fehlerprüfsonden (28) in Kammern (25) untergebracht sind, die vom Kühlmittel durchflossen werden.

7. Vorrichtung nach Anspruch 6, dadurch gekennzeichnet, daß der Boden der Kammern (25) unter der Fehlerprüfsonde (28) eine Öffnung aufweist, die durch eine dünne Abdeckplatte aus vorzugsweise austenitischem Stahl abgeschlossen ist.

8. Vorrichtung nach Anspruch 1, dadurch gekennzeichnet, daß der Querschnitt der Auslaßöffnungen (26) der Kühlmittelwege (24, 25) geringer ist als der kleinste vorhergelegene Querschnitt der Kühlmittelwege (24, 25).

9. Vorrichtung nach Anspruch 8, dadurch gekennzeichnet, daß der Querschnitt der Auslaßöffnungen (26) der Kühlmittelwege (24, 25) einstellbar ist.

10. Vorrichtung nach Anspruch 1, dadurch gekennzeichnet, daß die Peripherie des Rotierkörpers (1) umgeben ist von einer ringförmigen Auffangwanne (34).

## Claims

1. Apparatus for scanning a surface of a testpiece, by at least one test probe which rotates in a plane parallel to said surface, comprising a rotary body in which said defect test probe is installed, drive means for driving the rotary body and electrical connecting means for connecting the test probe to an electronic testing and analysing circuit, characterised by

a) a rotary body (1) of solid material which is a good conductor of heat and which has a high thermal capacity, for scanning a hot testpiece,

b) cooling passages (24) extending from the inside outwardly in the rotary body (1),

c) a hollow shaft (3) which is connected on the one hand to the rotary body (1) and on the other hand to the drive means and the bore in which is connected to the cooling passages (24) of the rotary body (1), and

d) a stationary feed arrangement (14) for a coolant, which opens into the bore in the hollow shaft (3).

2. Apparatus according to claim 1 characterised in that the cooling passages (24) extend in a star configuration from the centre outwardly.

3. Apparatus according to claim 2 characterised in that the cooling passages (24) are of a serpentine or such similar configuration.

4. Apparatus according to claim 1 characterised in that one or more cooling passages extend in a spiral from the inside outwardly.

5. Apparatus according to claim 1 characterised in that the rotary body (1) is of a disc-like configuration and is composed of a lower portion (2) and an upper portion (21).

6. Apparatus according to claim 1 characterised in that the defect test probes (28) are disposed in chambers (25) through which the coolant flows.

7. Apparatus according to claim 6 characterised in that, beneath the defect test probe (28), the floor of the chambers (25) has an opening which is closed by a thin cover plate of preferably austenitic steel.

8. Apparatus according to claim 1 characterised in that the cross-section of the outlet openings (26) of the coolant passages (24, 25) is smaller than the smallest cross-section upstream thereof in the coolant passages (24, 25).

9. Apparatus according to claim 8 characterised in that the cross-section of the outlet openings (26) of the coolant passages (24, 25) is adjustable.

10. Apparatus according to claim 1 characterised in that the periphery of the rotary body (1) is surrounded by an annular collecting trough (34).

## Revendications

1. Dispositif de sondage de la surface d'une éprouvette au moyen d'au moins une sonde détectrice de défauts tournant dans un plan parallèle à la surface en question, équipé d'un corps rotatif dans lequel la sonde détectrice de défauts est montée, de moyens d'entraînement pour l'entraînement du corps rotatif et de moyens de liaison électriques pour le raccordement de la sonde à un circuit électronique de contrôle et de traitement des données, caractérisé en ce que

a) il comprend un corps rotatif (1) constitué par un matériau massif bon conducteur de la chaleur ayant une grande capacité calorifique pour le sondage d'une éprouvette chaude,

b) des conduits de refroidissement (24) ménagés dans le corps rotatif et allant de l'intérieur vers l'extérieur,

c) un arbre creux (3) qui est relié d'une part au corps rotatif (1) et d'autre part aux moyens d'entraînement et dont l'alésage est en communication avec les canaux de refroidissement (24) du corps rotatif (1),

d) et un dispositif fixe (14) d'amenée d'un milieu réfrigérant débouchant dans l'alésage de l'arbre creux (3).

2. Dispositif selon la revendication 1, caractérisé en ce que les conduits de refroidissement (24) sont disposés en étoile à partir du milieu.

3. Dispositif selon la revendication 2, caractérisé en ce que les conduits de refroidissement (24) suivant un tracé comportant des méandres comme un serpentin ou un tracé analogue.

4. Dispositif selon la revendication 1, caractérisé en ce qu'un ou plusieurs conduits de refroidissement vont en spirale de l'intérieur vers l'extérieur.

5. Dispositif selon la revendication 1, caractérisé en ce que le corps rotatif (1) a la forme d'un disque et est composé d'une partie inférieure (2) et d'une partie supérieure (21).

6. Dispositif selon la revendication 1, caractérisé en ce que les sondes (28) de détection des défauts sont placées dans des chambres (25) qui sont traversées par le milieu réfrigérant.

7. Dispositif selon la revendication 6, caractérisé en ce que le fond des chambres (25) comporte, sous la sonde (28) de détection des défauts, une ouverture qui est fermée par une plaque couvrante constituée de préférence par de l'acier austénitique.

8. Dispositif selon la revendication 1, caractérisé en ce que la section transversale des ouvertures de sortie (26) des conduits (24, 25) de milieu réfrigérant est plus petite que la section transversale la plus petite existant en amont dans les conduits (24, 25) de milieu réfrigérant.

9. Dispositif selon la revendication 8, caractérisé en ce que la section transversale des ouvertures d'évacuation (26) des conduits (24, 25) de milieu réfrigérant est réglable.

10. Dispositif selon la revendication 1, caractérisé en ce que la périphérie du corps rotatif (1) est entourée par une cuve collectrice annulaire (34).

Fig.1

Fig.2

0 067 935